# EUROPEAN PATENT SPECIFICATION

(11) **EP 2 754 304 B1**
(45) Date of publication and mention of the grant of the patent: **01.08.2018**
(21) Application number: 11754653.1
(22) Date of filing: 07.09.2011
(51) Int. Cl.: H04Q 9/00

(54) **VALVE POSITIONER AND VALVE MONITORING SYSTEM**
VENTILSTELLER UND VENTILÜBERWACHUNGSSYSTEM
POSITIONNEUR DE VANNE ET SYSTÈME DE SURVEILLANCE DE VANNE

(43) Date of publication of application: 16.07.2014
(73) Proprietor: ABB Schweiz AG, 5400 Baden (CH)
(72) Inventor: WEEMES, Phillip, N-0767 Oslo (NO); JELLUM, Edgar, N-1384 Asker (NO)
(74) Representative: Savela, Reino Aleksi
(86) International application number: PCT/EP2011/065451
(87) International publication number: WO 2013/034179

(56) References cited:
- US-A1- 2006 092 039
- US-A1- 2010 256 784

## Description

### TECHNICAL FIELD

The invention relates to a valve positioner comprising a valve operation information unit adapted to obtain information about a real position of a valve, as well as to a central valve monitoring unit for communication with a valve positioner, a valve monitoring system comprising a valve positioner, a use of a valve positioner to obtain information about a real position of a valve, and a method of upgrading a valve monitoring system.

### BACKGROUND

Safety valves of industrial plants need to be tested regularly in order to comply with government safety regulations etc. The testing requirements depend on the type of industrial plant and the potential damage caused by a valve malfunction. Off-shore industry may e.g. have high safety requirements such as Safety Integrity Level 3 (SIL 3). Old valve control systems may not be able to test the valve function without shutting down the industrial process, since the valve has to be completely closed or opened (depending on what the safe position of the safety valve is). Shutting down the industrial process regularly for such testing is very costly.

Modern valve control systems may use so called intelligent valve positioners, such as the SVI II Digital Positioner from Yokogawa, which may test safety valves during continued operation of the industrial process by starting to move the valve towards its safe position and detecting that the valve reacts and moves as expected and needed whereby the movement may be reversed back to its regular position without having reached its safe position. The positioner can communicate its observations about the valve function via its wired connection to the I/O board of the control system using the HART protocol. To upgrade old valve control systems to this new higher standard entails exchanging most or all of the old system units for all valves of the plant being controlled in this way, which is very costly. Document US2010/0256784 A1 discloses a valve controller with wireless transmitter.

### SUMMARY

As ever higher demands are put on safety and testing of valves, such as safety valves, in industry and industrial plants, especially off-shore plants and plants dealing with potentially harmful substances e.g. oil and natural gas field plants, old valves need to be upgraded to conform to new and higher safety standards. Typically, an I/O board interface communicating with a solenoid via a 24 V DC current is used to control a valve, such as a safety valve. However, with such I/O boards, the valve needs to be fully closed/opened for detection that the valve operates properly, why the plant operation affected by/relying on the valve needs to be halted or shut down during testing of the valve, which can be very costly. Exchanging such a valve control and monitoring system for a new upgraded valve control system which can test the valve without having to stop plant operation entails completely re-wiring the control and monitoring system, e.g. exchanging the I/O board for one able to handle HART communications or other information communications which are more complex than the standard 24 V DC. This can also be very costly. Modern systems which can test e.g. a safety valve without stopping the whole industrial process does so typically by starting to open/close the valve and observing that and how the valve moves. The valve may then only need to be moved e.g. 20% towards its fully opened/closed position to determine that the valve functions adequately. It has now been realised that valve control and monitoring systems may be upgraded to modern standard more cheaply and easily by using a valve positioner able to communicate information about the valve, such as real position of the valve (how open/closed it is) and/or the condition of the valve when it is moving and/or other valve operation information, wirelessly to a central valve monitoring unit. By wireless radio communication of the valve information, the re-wiring of the valve control and monitoring system may be reduced and the old I/O board and/or solenoid etc. may remain to control the opening/closing of the valve while the valve positioner monitors the function of the valve.

According to an aspect of the present invention, there is thus provided a valve positioner comprising: a valve operation information unit adapted to obtain operational information about a valve; a processing unit adapted to prepare a communication message comprising the operational information about the valve; a wireless transmitter adapted for transmission of a wireless radio communication signal comprising the communication message to a central valve monitoring unit; and an antenna adapted to wirelessly transmit the wireless communication signal. The operational information may e.g. comprise information about a real open/closed position of the valve or information about the functioning of the valve when the valve is moving towards an open/closed position. According to a specific embodiment of this aspect, the communication message is a Highway Addressable Remote Transducer (HART) protocol communication message.

According to another aspect of the present invention, there is provided a central valve monitoring unit comprising a wireless receiver adapted for reception of a wireless communication signal comprising a communication message from a valve positioner of the previous aspect of the invention, i.e. a valve positioner comprising a valve operation information unit adapted to obtain operational information about a valve; a processing unit adapted to prepare a communication message, such as a HART communication message, comprising the operational information about the valve; a wireless transmitter adapted for transmission of a wireless communication signal comprising the communication message to a central valve monitoring unit; and an antenna adapted to transmit the wireless communication signal.

According to another aspect of the present invention, there is provided a valve monitoring system comprising a solenoid adapted for opening and closing a valve; an input/output board (I/O board) adapted for communication with the solenoid and for inducing the solenoid to open and/or close the valve; and a valve positioner according to above aspects.

According to another aspect of the present invention, there is provided a method of a valve positioner, the method comprising: obtaining operational information about a valve; preparing a communication message comprising the operational information about the valve; and transmitting a wireless communication signal comprising the communication message to a central valve monitoring unit.

According to another aspect of the present invention, there is provided a use of a wireless valve positioner to obtain operational information about a valve and wirelessly transmitting this information in a communication message, such as a HART communication message, to a central valve monitoring unit.

According to another aspect of the present invention, there is provided a method of upgrading a valve monitoring system comprising a solenoid adapted for opening and closing a valve, and an input/output board (I/O board) adapted for communication with the solenoid and for inducing the solenoid to open and/or close the valve and adapted for communication of safety control signals at 24 V direct current (DC) with the solenoid, the method comprising installing a valve positioner according to above aspects in the valve monitoring system such that the valve positioner can obtain the operational information about the valve; and installing a converter in the valve monitoring system such that a 24 V DC electrical current from the I/O board can be converted to a 4..20 mA electrical current to the valve positioner.

Any discussion above or below relating to one of the above aspects of the present invention is also, in applicable parts, relevant to the other aspects of the present invention.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated

### BRIEF DESCRIPTION OF THE DRAWINGS

The invention is now described, by way of example, with reference to the accompanying drawings, in which:
Fig 1 is a schematic diagram of an embodiment of a valve positioner according to the invention.
Fig 2 is a schematic diagram of an embodiment of a central valve monitoring unit according to the invention.
Fig 3 is a schematic diagram of an embodiment of a valve monitoring system according to the invention.
Fig 4 is a schematic flow chart of an embodiment of a method of upgrading a valve monitoring system in accordance with the invention.
Fig 5 is a schematic flow chart of an embodiment of a method of a valve positioner in accordance with the invention.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

The valve to be controlled and/or monitored may be any valve where it is desired to obtain information about the operation of the valve, especially without having to stop the industrial process or such which the valve is related to. Especially, the valve may be a safety valve, but also other valves of a process may conveniently be monitored by means of the present invention. Typically, a safety valve is closed during normal operation, but opened as needed at abnormal operation (accident, overload, breakage etc.), and regular (in-line) valves are open during normal operation, but maybe closed at process shut down or abnormal operation or such. It maybe important for safety and operational reliability that any valve is monitored for function regularly and/or continuously.

The valve operation information unit maybe any such unit able to obtain information about a real position of the valve, e.g. in what position the valve is, how many per cent open and/or how many per cent closed, or the like. The valve operation information unit maybe similar or identical to such a unit or function of a regular intelligent valve positioner e.g. one that is in conformity with SIL 2 or higher, such as SIL 3.

The processing unit maybe any such unit able to prepare a communication message comprising the obtained information, according to any convenient communication standard e.g. HART. Again, the unit maybe similar or identical to such a unit or function of a regular intelligent valve positioner e.g. one that is in conformity with SIL 2 or higher.

The wireless transmitter and the antenna associated with the transmitter may be any wireless transmitter and antenna able to transmit the communication message as a wireless communication signal, e.g. radio signal, to a central valve monitoring unit. The antenna maybe a part of the wireless transmitter or it maybe separate from the wireless transmitter. The antenna may also be adapted for reception of wireless communication signals, e.g. radio signals.

The different units of the valve positioner discussed above (the valve operation information unit, the processing unit, the wireless transmitter and the antenna) cooperates to obtain a novel valve positioner able to communicate information about the valve wirelessly without the need to extensively re-wire the old control system of the valve.

Any adequate communication standard for the wireless transmission of the valve information communication message maybe used, but it maybe convenient to use the HART protocol since this is well adapted to such communication. Thus, the valve positioner maybe a valve positioner wherein the communication message is a Highway Addressable Remote Transducer, HART, protocol communication message.

In addition to the real position of the valve, the valve positioner (e.g. the valve operation information unit) may also be adapted to obtain information about other parameter(s) of the valve operation, such as the functioning of the valve as it moves towards a fully open or fully closed position. Such parameters may e.g. be how easily and/or fast the valve moves, how fast the valve is to react to a command to move etc. Thus, the valve positioner maybe a valve positioner wherein the valve operation information unit is also adapted to obtain information about the functioning of the valve when the valve is moving towards an open or closed position.

The valve positioner of the present invention maybe especially advantageous for processes, such as industrial plants, where the safety requirements are high, and the valve thus needs to be monitored and tested often. Examples of such safety requirements are Safety Integrity Level 2, SIL 2, Safety Integrity Level 3, SIL 3, and even higher safety standards. Thus, the valve positioner may be a valve positioner wherein the valve positioner is in conformity with the Safety Integrity Level 2, SIL 2, or higher. The central valve monitoring unit is adapted to receive the communication message from the valve positioner by means of its wireless receiver. In analogy with the discussion above about the valve positioner and its transmitter, the central valve monitoring unit may also comprise an antenna, separate from or as a part of the wireless receiver. The central valve monitoring unit maybe adapted to receive valve operation information from a plurality of valves, wherein each of which valves may be associated with a valve positioner of the present invention or a different type of valve positioner. The central valve monitoring unit maybe adapted to present the valve operation information from the valve(s) to an operator, possibly human, who may then draw conclusions on how the valve operates and if further actions are needed (e.g maintenance of the valve or further testing). Alternatively, the central valve monitoring unit may comprise pre-programmed threshold values for the valve when it is deemed to operate adequately and may e.g. sound an alarm or automatically stop the process with which the valve is associated if its operational values falls short of the threshold values during testing.

As discussed above, the valve positioner of the present invention allows for a valve control and monitoring system to retain much of its old wiring, such as solenoid and I/O board, when being upgraded. The solenoid may e.g. control an air pressure, e.g. about 5 bar, that keeps the valve, such as a safety valve, closed or opened (depending on the type of safety valve). Typically, such a solenoid is fed 24 V DC electricity from the I/O board, and if the voltage is removed or reduced, the air pressure is lost or reduced and the valve goes to its fail safe position (opened or closed). The I/O board, such as a digital output board, supplies the solenoid with the 24 V DC electricity and may thus control the solenoid and the opening/closing of the valve. The I/O board may also be able to detect whether the valve is fully open or fully closed, but typically not a position there between. The I/O board, such as a digital input/output board, may thus be adapted to communicate control signals at 24 V direct current, DC, with the solenoid. However, the I/O board may not be adapted to receive, forward and/or process HART communications, or any other more complex communication standard. Specifically, the I/O board may not be adapted to use a current of 4..20 mA for controlling and communicating with a valve positioner.

If the valve positioner is to communicate by means of HART signalling, the 24 V DC supplied by the I/O board may not suffice. Rather, the valve positioner may need to be fed a 4..20 mA current. This current maybe used for HART signalling. Also, this current may allow the valve loop to always be powered to a certain level and a micro processor of the valve positioner maybe kept alive and running during shutdown and/or testing of the valve or industrial process. This allows for the valve operation information to be obtained during a shutdown or a partial stroke test of the valve.

The valve monitoring system may also comprise a central valve monitoring unit as discussed above.

An old valve monitoring system may thus be upgraded by installing a new (intelligent) valve positioner according to the present invention in parallel with the old valve control and monitoring system. This may be done by installing the new valve positioner to monitor the valve as well as an electrical converter adapted to convert the electricity from the I/O board, such as 24 V DC, to e.g. 4..20 mA that maybe fed to the valve positioner.

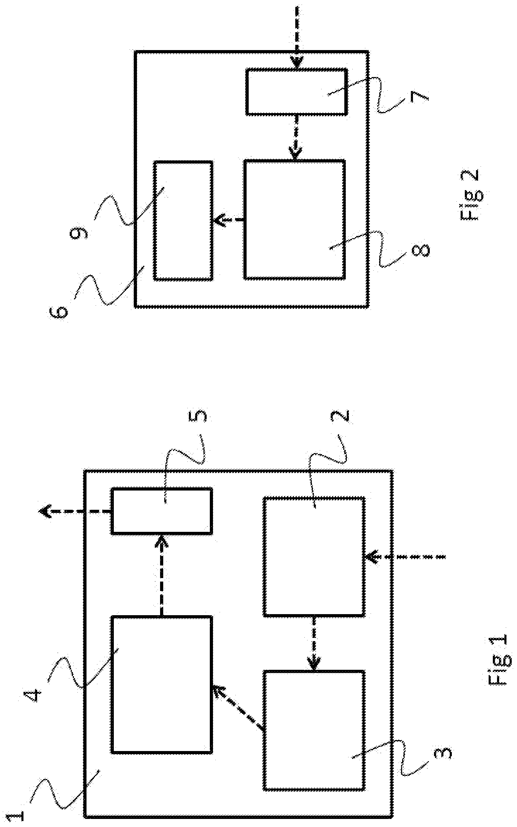

Referring now to figure 1, an embodiment of a valve positioner 1 of the present invention is schematically shown.

The valve positioner 1 comprises a valve operation information unit 2 which may obtain operational information from and about the valve to which the valve positioner 1 is associated The operational information maybe obtained from the valve e.g. by means of sensors attached to the valve to detect or measure different parameters of its operation, such as the real position of the valve (e.g. fully open, fully closed, percentage open or closed), movement speed, reaction time, temperature etc. The valve operation information unit 2 is adapted for communication with a processing unit 3 such that the operation information maybe transferred to the processing unit 3. The processing unit 3 is adapted to prepare a communication message comprising the operational information obtained by the valve operation information unit 2. The processing unit 3 is also adapted for communication with the wireless radio transmitter 4 such that the communication message prepared by the processing unit 3 may be transmitted as a wireless communication signal by means of the transmitter 4. The transmitter 4 is associated with the antenna 5 which is adapted to transmit the wireless communication signal (radio signal) comprising the operation information of the valve. The dashed arrows of figure 1 illustrate the transferring of the valve operation information (as processed within the valve positioner 1) to, within and from the valve positioner 1.

Figure 2 schematically shows an embodiment of a central valve monitoring unit 6 according to the present invention. The central valve monitoring unit 6 comprises a wireless radio receiver 8 associated with an antenna 7. The antenna 7 and receiver 8 are adapted to receive wireless communication signals comprising a communication message comprising valve operation information from one or several valve positioner(s), such as the valve positioner of figure 1. The central valve monitoring unit 6 also comprises a processing unit 9 adapted to communicate with the receiver 8 and to process the received valve operation information. The processing unit 9 may e.g. check whether values of the operational information are within, above or below pre-set thresholds for adequate operation of the valve, present the information to an operator, compile statistics over time, correlate the information with similar information from other valves, sound an alarm, stop an industrial process associated with the valve etc.. The dashed arrows of figure 2 illustrate the transferring of the valve operation information (as processed within the valve monitoring unit 6) to and within the valve monitoring unit 6.

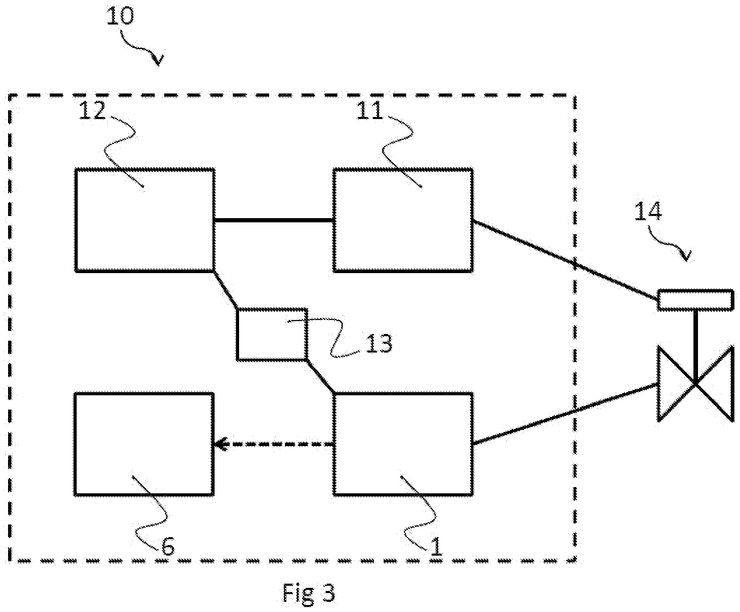

Figure 3 shows an embodiment of a valve monitoring system 10 according to the present invention, as well as a valve 14 with which the valve monitoring system 10 is associated. The system 10 comprises an I/O board 12 connected and supplying electricity, such as 24 V DC, to the solenoid 11. In accordance with the embodiment illustrated in figure 3, the I/O board is also connected and supplies electricity to the electricity converter 13. The solenoid 11 is connected to the valve 14 so as to being able to open and close the valve 14 during normal operation of the valve 14 and the system 10. The converter 13 is arranged to convert the electricity supplied by the I/O board 12 to electricity suitable for the valve positioner 1, e.g. 4..20 mA current electricity. The converter 13 is connected and supplying electricity to said valve positioner 1. The valve positioner 1 maybe a valve positioner in accordance with figure 1, or another suitable valve positioner. The valve positioner 1 is arranged to monitor the operation of the valve 14 as discussed above. In figure 3, the solenoid 11 and the valve positioner 1 are depicted as separate entities. However, the solenoid 11 may be a part of the valve positioner 1, allowing the valve positioner 1 to also control the valve 14 in addition to monitoring the valve 14. Regardless of whether or not the solenoid 11 is part of the valve positioner 1, the valve positioner is only supplied with 4..20 mA via the converter 13. The valve positioner energizes the solenoid when signal is 20mA and de-energizes the solenoid when the current is 4mA or less. The valve positioner 1 is also arranged able to wirelessly communicate with the central valve monitoring unit 6, as illustrated by the dashed arrow in figure 3. The central valve monitoring unit maybe a central valve monitoring unit in accordance with figure 2, or another suitable central valve monitoring unit.

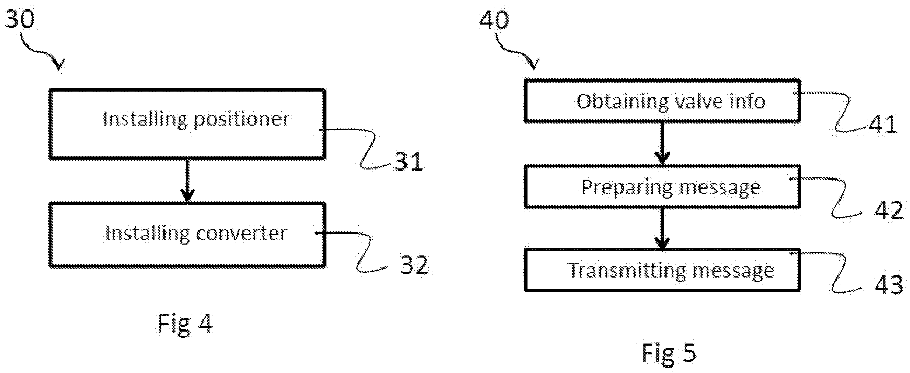

Figure 4 is a schematic flow chart of an embodiment of a method 30 for upgrading a valve monitoring system in accordance with the present invention. Instead of exchanging or re-wiring the whole valve monitoring system, a valve positioner 1 as discussed above is installed (step 31) in addition, e.g. in parallel, to the existing system. The valve positioner 1 is installed such that it is arranged to monitor the operation of the valve 14 as discussed above. In order to supply the valve positioner 1 with electricity and to allow communication of operational information about the valve 14 to the central valve monitoring unit 6, an electricity converter 13 is also installed (step 32). As discussed above, the converter 13 may e.g. be arranged to convert 24 V DC electricity from the I/O board 12 to 4..20 mA electricity and supply it to the valve positioner 1.

Figure 4 is a schematic flow chart of an embodiment of a method 40 of a valve positioner 1 in accordance with the present invention. As discussed also above, the valve positioner 1 obtains (step 41) operational information about the valve 14, e.g. by means of a valve operation information unit 2 of figure 1. The valve positioner 1 then prepares (step 42) a communication message comprising the operational information about the valve 14, e.g. by means of a processing unit 3 of figure 1. The valve positioner 1 then transmits (step 43) a wireless communication signal comprising the communication message to a central valve monitoring unit 6 of figure 2, e.g. by means of a transmitter 4 and an antenna 5 of figure 1.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A valve monitoring system (10) comprising:
a solenoid (11) adapted for opening and closing a valve (14);
an input/output board, I/O board, (12) adapted for communication with the solenoid (11) and for inducing the solenoid (11) to open and close the valve (14) by feeding a 24 V DC current to the solenoid;
a valve positioner (1) comprising:
a valve operation information unit (2) adapted to obtain operational information about a valve (14);
a processing unit (3) adapted to prepare a communication message comprising the operational information about the valve (14);
a wireless transmitter (4) adapted for transmission of a wireless communication signal comprising the communication message to a central valve monitoring unit (6); and
an antenna (5) adapted to transmit the wireless communication signal;
a central valve monitoring unit (6) comprising:
a wireless receiver (8) adapted for reception of the wireless communication signal comprising the communication message from the valve positioner (1); and
an electrical converter (13) adapted to convert the 24 V DC current from the I/O board (12) to a 4..20 mA current to be fed to the valve positioner (1).

2. The system according to claim 1. wherein the solenoid (11) is connected to, and adapted for being supplied with 24 V DC electricity by, the I/O board (12).

3. The system according to claim 1 or 2, wherein the communication message is a Highway Addressable Remote Transducer, HART, protocol communication message.

4. The system according to any preceding claim, wherein the operational information comprises information about a real open/closed position of the valve (14).

5. The system according to any preceding claim, wherein the operational information comprises information about the functioning of the valve (14) when the valve is moving towards an open/closed position.

6. A system according to any preceding claim, wherein the I/O board (12) is adapted to communicate control signals at 24 V direct current, DC, with the solenoid (11).

7. A valve monitoring system according to any preceding claim, wherein the I/O board (12) is not adapted to receive, forward and/or process HART communication.

8. A method (30) of upgrading a valve monitoring system (10) comprising a solenoid (11) adapted for opening and closing a valve (14), and an input/output board, I/O board, (12) adapted for communication with the solenoid (11) and for inducing the solenoid (11) to open and close the valve (14) and adapted for communication of safety control signals at 24 V direct current, DC, with the solenoid (11), the method comprising:
installing (31) a valve positioner (1) according to any claim 1-5 in the valve monitoring system (10) such that the valve positioner (1) can obtain the operational information about the valve (14); and
installing (32) a converter (13) in the valve monitoring system (10) such that a 24 V DC electrical current from the I/O board (12) can be converted to a 4..20 mA electrical current to the valve positioner (1).

## Patentansprüche

1. Ventilüberwachungssystem (10), umfassend:
ein Solenoid (11), das geeignet ist zum Öffnen und Schließen eines Ventils (14);
eine Eingangs-/Ausgangsplatine, E/A-Platine, (12), die geeignet ist für eine Kommunikation mit dem Solenoid (11) und zum Veranlassen, dass das Solenoid (11) das Ventil (14) öffnet und schließt, indem das Solenoid mit einem 24-V-Gleichstrom versorgt wird;
einen Ventilstellungsregler (1), umfassend:
eine Ventilbetriebsinformationseinheit (2), die geeignet ist, um Betriebsinformationen über ein Ventil (14) zu erhalten;
eine Verarbeitungseinheit (3), die geeignet ist, um eine Kommunikationsnachricht vorzubereiten, welche die Betriebsinformationen über das Ventil (14) umfasst;
einen drahtlosen Sender (4), der geeignet ist für eine Übertragung eines drahtlosen Kommunikationssignals, das die Kommunikationsnachricht umfasst, an eine zentrale Ventilüberwachungseinheit (6); und
eine Antenne (5), die geeignet ist, um das drahtlose Kommunikationssignal zu übertragen;
eine zentrale Ventilüberwachungseinheit (6), umfassend:
einen drahtlosen Empfänger (8), der geeignet ist für einen Empfang des drahtlosen Kommunikationssignals, das die Kommunikationsnachricht umfasst, von dem Ventilstellungsregler (1);
und
einen elektrischen Wandler (13), der geeignet ist, den 24-V-Gleichstrom von der E/A-Platine (12) in einen 4 ... 20-mA-Strom zu wandeln, mit dem der Ventilstellungsregler (1) versorgt wird.

2. System nach Anspruch 1, wobei das Solenoid (11) mit der E/A-Platine (12) verbunden ist und geeignet ist, um von dieser mit einer 24-V-DC-Elektrizität versorgt zu werden.

3. System nach Anspruch 1 oder 2, wobei die Kommunikationsnachricht eine Kommunikationsnachricht in einem "Highway Addressable Remote Transducer"-Protokoll (HART-Protokoll) ist.

4. System nach einem der vorhergehenden Ansprüche, wobei die Betriebsinformationen Informationen über eine tatsächliche Offen/Geschlossen-Stellung des Ventils (14) umfassen.

5. System nach einem der vorhergehenden Ansprüche, wobei die Betriebsinformationen Informationen über das Funktionieren des Ventils (14) umfassen, wenn sich das Ventil (14) in Richtung auf eine Offen/GeschlossenStellung bewegt.

6. System nach einem der vorhergehenden Ansprüche, wobei die E/A-Platine (12) geeignet ist, um Steuersignale mit einem 24-V-Gleichstrom an das Solenoid (11) zu kommunizieren.

7. Ventilüberwachungssystem nach einem der vorhergehenden Ansprüche, wobei die E/A-Platine (12) nicht geeignet ist, um eine HART-Kommunikation zu empfangen, weiterzuleiten und/oder zu verarbeiten.

8. Verfahren (30) zum Nachrüsten eines Ventilüberwachungssystems (10), das ein Solenoid (11), das geeignet ist zum Öffnen und Schließen eines Ventils (14), und eine Eingangs-/Ausgangsplatine, E/A-Platine, (12) umfasst, die geeignet ist für eine Kommunikation mit dem Solenoid (11) und zum Veranlassen, dass das Solenoid (11) das Ventil (14) öffnet und schließt, und die geeignet ist für eine Kommunikation von Sicherheitssteuersignalen mit einem 24-V-Gleichstrom an das Solenoid, wobei das Verfahren umfasst:
Installieren (31) eines Ventilstellungsreglers (1) nach einem der Ansprüche 1 bis 5 in dem Ventilüberwachungssystem (10), sodass der Ventilstellungsregler (1) die Betriebsinformationen über das Ventil (14) erhalten kann; und
Installieren (32) eines Wandlers (13) in dem Ventilüberwachungssystem (10), sodass ein elektrischer 24-V-Gleichstrom von der E/A-Platine (129 in einen elektrischen 4 ... 20-mA-Strom für den Ventilstellungsregler (1) gewandelt werden kann.

## Revendications

1. Système de surveillance de soupape (10), comprenant :
un solénoïde (11) adapté pour ouvrir et fermer une soupape (14) ;
une carte d'entrée/de sortie, carte d'I/O, (12) adaptée pour la communication avec le solénoïde et pour faire en sorte que le solénoïde (11) ouvre et ferme la soupape (14) en fournissant un courant CC de 24 V au solénoïde ;
un positionneur de soupape (1) comprenant :
une unité d'informations de fonctionnement de soupape (2) adapté pour obtenir des informations de fonctionnement concernant une soupape (14) ;
une unité de traitement (3) adaptée pour préparer un message de communication comprenant les informations de fonctionnement concernant la soupape (14) ;
un transmetteur sans fil (4) adapté pour la transmission d'un signal de communication sans fil comprenant le message de communication à une unité centrale de surveillance de soupape (6) ; et
une antenne (5) adaptée pour transmettre le signal de communication sans fil ;
une unité centrale de surveillance de soupape (6) comprenant :
un récepteur sans fil (8) adapté pour la réception du signal de communication sans fil comprenant le message de communication à partir du positionneur de soupape (1) ; et
un convertisseur électronique (13) adapté pour convertir le courant CC de 24 V provenant de la carte d'I/O (12) en un courant de 4-20 mA destiné à être fourni au positionneur de soupape (1).

2. Système selon la revendication 1, dans lequel le solénoïde (11) est connecté à, et adapté pour être alimenté en électricité CC de 24 V par, la carte d'I/O (12).

3. Système selon la revendication 1 ou 2, dans lequel le message de communication est un message de communication de protocole HART, « Highway Addressable Remote Transducer ».

4. Système selon l'une quelconque revendication précédente 1 ou 2, dans lequel les informations de fonctionnement comprennent des informations concernant une position ouverte/fermée réelle de la soupape (14).

5. Système selon une quelconque revendication précédente, dans lequel les informations de fonctionnement comprennent des informations concernant l'état de marche de la soupape (14) lorsque la soupape se déplace vers une position ouverte/fermée.

6. Système selon une quelconque revendication précédente, dans lequel la carte d'I/O (12) est adaptée pour communiquer des signaux de commande à courant continu, CC, de 24 V, avec le solénoïde (11).

7. Système de surveillance de soupape selon une quelconque revendication précédente, dans lequel la carte d'I/O (12) n'est pas adaptée pour recevoir, réacheminer et/ou traiter une communication HART.

8. Procédé (30) de mise à niveau d'un système de surveillance de soupape (10) comprenant un solénoïde (11) adapté pour ouvrir et fermer une soupape (14), et une carte d'entrée/de sortie, carte d'I/O, (12) adaptée pour la communication avec le solénoïde (11) et pour faire en sorte que le solénoïde (11) ouvre et ferme la soupape (14) et adaptée pour la communication de signaux de commande de sécurité à courant continu, CC, de 24 V avec le solénoïde (11), le procédé comprenant :
l'installation (31) d'un positionneur de soupape (1) selon une quelconque revendication 1 à 5 dans le système de surveillance de soupape (10) de telle sorte que le positionneur de soupape (1) puisse obtenir les informations de fonctionnement concernant la soupape (14) ; et
l'installation (32) d'un convertisseur (13) dans le système de surveillance de soupape (10) de telle sorte qu'un courant électrique CC de 24 V provenant de la carte d'I/O (12) puisse être converti en un courant électrique de 4-20 mA pour le positionneur de soupape (1).
